(19) Europäisches Patentamt
European Patent Office
Office européen des brevets

(11) EP 4 712 648 A1

(12) EUROPEAN PATENT APPLICATION
published in accordance with Art. 153(4) EPC

(43) Date of publication:
18.03.2026 Bulletin 2026/12

(21) Application number: 24737854.0

(22) Date of filing: 10.05.2024

(51) International Patent Classification (IPC):
H04W 72/23 (2023.01)     H04W 72/0453 (2023.01)
H04W 72/0457 (2023.01)     H04W 48/10 (2009.01)
H04L 5/00 (2006.01)

(52) Cooperative Patent Classification (CPC):
H04L 5/00; H04W 48/10; H04W 72/0453;
H04W 72/0457; H04W 72/23

(86) International application number:
PCT/KR2024/006404

(87) International publication number:
WO 2024/237606 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.05.2023 US 202363466230 P
11.08.2023 KR 20230105260

(71) Applicant: LG Electronics Inc.
Yeongdeungpo-gu
Seoul 07336 (KR)

(72) Inventors:
• KIM, Jaehyung
  Seoul 06772 (KR)
• YANG, Suckchel
  Seoul 06772 (KR)
• KIM, Seonwook
  Seoul 06772 (KR)
• LEE, Youngdae
  Seoul 06772 (KR)
• LEE, Sunghoon
  Seoul 06772 (KR)

(74) Representative: Maikowski & Ninnemann
Patentanwälte Partnerschaft mbB
Postfach 15 09 20
10671 Berlin (DE)

(54) **DEVICE AND METHOD FOR TRANSMITTING/RECEIVING DOWNLINK SIGNAL FOR NARROWBAND WIRELESS COMMUNICATION IN WIRELESS COMMUNICATION SYSTEM**

(57) There is provided a method performed by a user equipment (UE) in a wireless communication system. The method comprises receiving, from a base station (BS), an MIB including configuration information related to a number of contiguous resource blocks for control resource set (CORESET) #0 through a physical broadcast channel (PBCH) signal; and receiving, from the BS, a physical downlink control channel (PDCCH) through the CORESET #0 including second resource blocks excluding first resource blocks from the resource blocks based on i) the number of resource blocks and ii) a channel bandwidth. A puncturing based on a specific number of first resource blocks among the resource blocks is assumed for the CORESET #0. The PBCH signal includes information of a resource offset related to the CORESET #0, and the PDCCH is received in a search space related to the CORESET #0 based on the resource offset.

[FIG. 6]

## Description

[Technical Field]

The present disclosure relates to a wireless communication system. More particularly, the present disclosure relates to a device and method for transmitting and receiving a downlink signal for narrowband wireless communication in a wireless communication system.

[Background Art]

In order to efficiently support various use cases (e.g., IoT, wearable, etc.) in 5G in terms of cost/complexity, types of terminals with reduced cost/complexity are being introduced. Newly introduced types of terminals may reduce their maximum supported bandwidth and may not be able to receive all SSBs.

There is a demand from operators to apply the 5G NR system to wireless communication for railway, utility/infrastructure network, public safety, etc. using the existing narrowband spectrum (< 5 MHz). Reflecting these requirements, standardization work is underway in Rel-18 to support bandwidths (e.g., -3 MHz) less than 5 MHz in the NR system.

[Disclosure]

[Technical Problem]

In order to solve the above-described and other problems, the present disclosure provides a device and method for transmitting and receiving a downlink signal for narrowband wireless communication in a wireless communication system.

The present disclosure provides a device and method for contributing to the expansion of application use cases of the NR system by solving problems that may occur when supporting narrowband terminal/spectrum scenarios in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method performed by a user equipment (UE) in a wireless communication system, the method comprising receiving, from a base station (BS), a master information block (MIB) including configuration information related to a number of contiguous resource blocks for control resource set (CORESET) #0 through a physical broadcast channel (PBCH) signal; and receiving, from the BS, a physical downlink control channel (PDCCH) through the CORESET #0 including second resource blocks excluding first resource blocks from the resource blocks based on i) the number of the resource blocks and ii) a channel bandwidth, wherein a puncturing based on a specific number of first resource blocks among the resource blocks is assumed for the CORESET #0, wherein the PBCH signal includes information of a resource offset related to the CORESET #0, and wherein the PDCCH is received in a search space related to the CORESET #0 based on the resource offset.

According to various embodiments of the present disclosure, there is provided a method performed by a base station (BS) in a wireless communication system, the method comprising transmitting, to a user equipment (UE), a master information block (MIB) including configuration information related to a number of contiguous resource blocks for control resource set (CORESET) #0 through a physical broadcast channel (PBCH) signal; and transmitting, to the UE, a physical downlink control channel (PDCCH) through the CORESET #0 including second resource blocks excluding first resource blocks from the resource blocks based on i) the number of the resource blocks and ii) a channel bandwidth, wherein a puncturing based on a specific number of first resource blocks among the resource blocks is assumed for the CORESET #0, wherein the PBCH signal includes information of a resource offset related to the CORESET #0, and wherein the PDCCH is transmitted in a search space related to the CORESET #0 based on the resource offset.

According to various embodiments of the present disclosure, there is provided a user equipment (UE) in a wireless communication system, the UE comprising a transceiver, at least one processor, and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a base station (BS) in a wireless communication system, the BS comprising a transceiver, at least one processor, and at least one memory operably connectable to the at least one processor, wherein the at least one memory is configured to store instructions performing operations based on being executed by the at least one processor, and the operations comprise all steps of a method of operating the BS according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station (BS) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the BS according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating the UE according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating the BS according to various embodiments of the present disclosure.

[Advantageous Effects]

In order to solve the above-described and other problems, the present disclosure can provide a device and method for transmitting and receiving a downlink signal for narrowband wireless communication in a wireless communication system.

The present disclosure can provide a device and method for contributing to the expansion of application use cases of the NR system by solving problems that may occur when supporting narrowband terminal/spectrum scenarios in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a radio frame structure used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of a process for a UE to receive DL signals/channels in an initial access procedure in a system applicable to the present disclosure.

FIG. 6 illustrates an example where a BS or a UE defines or assumes an initial DL BWP as a (punctured) PBCH BW in a system applicable to the present disclosure.

FIG. 7 illustrates an example where a BS or a UE defines or assumes an initial DL BWP as a (punctured) PBCH BW in a system applicable to the present disclosure.

FIG. 8 illustrates an example of an operation process of a UE in a system applicable to the present disclosure.

FIG. 9 illustrates an example of an operation process of a base station in a system applicable to the present disclosure.

FIG. 10 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

General Signal Transmission Method in 3GPP

Physical Channels and General Signal Transmission

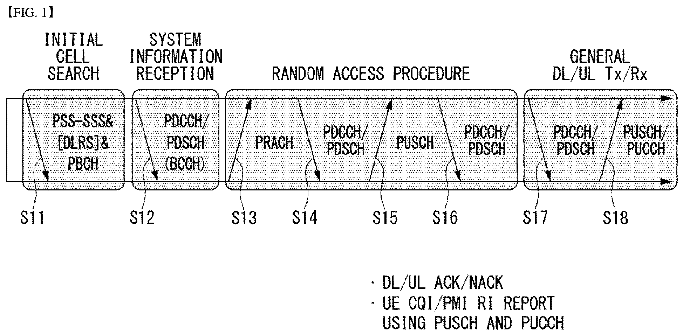

FIG. 1 illustrates physical channels used in a system applicable to the present disclosure and an example of a general signal transmission method using the physical channels. More specifically, FIG. 1 illustrates physical channels used in the 3GPP system and general signal transmission.

FIG. 1 illustrates physical channels used in the 3GPP system and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and

# EP 4 712 648 A1

PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

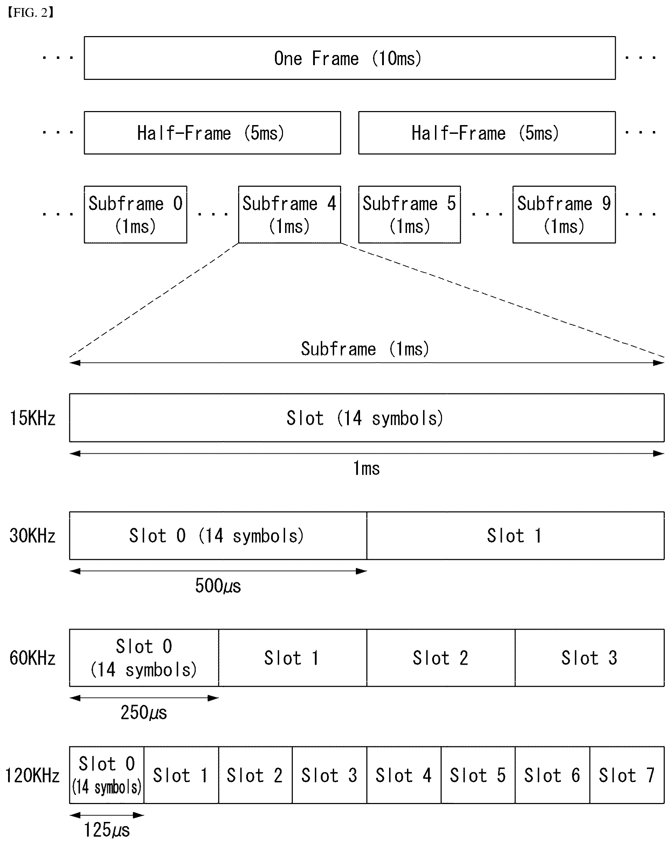

FIG. 2 illustrates an example of a radio frame structure used in a system applicable to the present disclosure.
In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).
Table 1 shows that when the normal CP is used, the number of symbols per slot, the number of slots per frame, and the number of slots per subframe vary depending on the SCS.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.
Table 2 shows that when the extended CP is used, the number of symbols per slot, the number of slots per frame, and the number of slots per subframe vary depending on the SCS.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.
An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

5

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

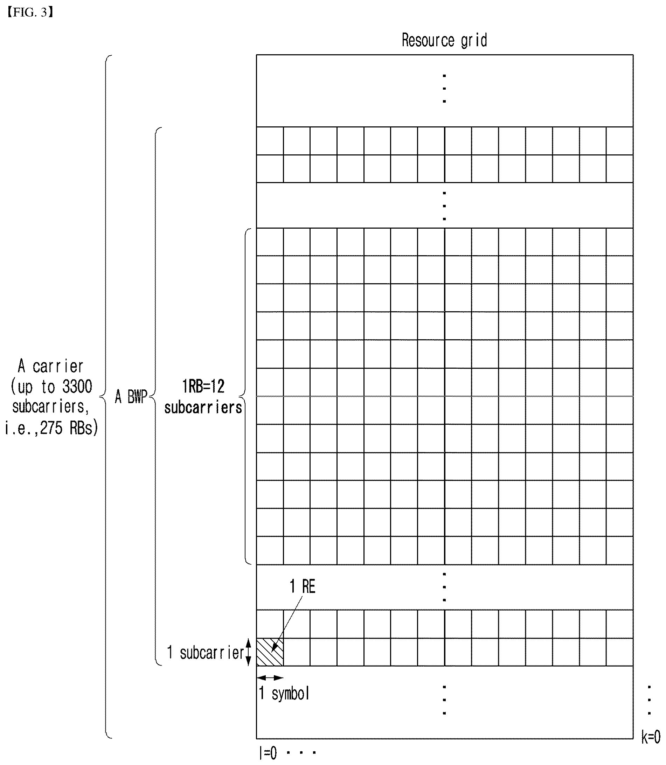

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

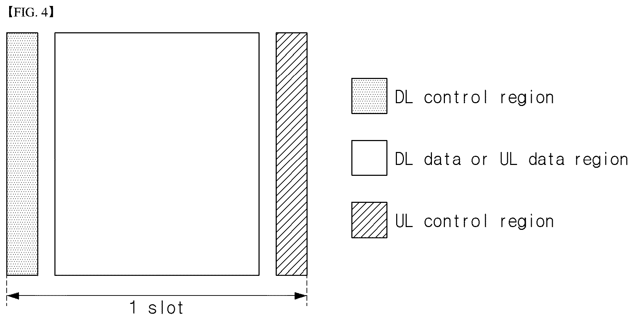

FIG. 4 illustrates an example of a slot structure of a radio frame used in a system applicable to the present disclosure.

Specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary (e.g., DL control/DL data/UL control/UL data or UL control/UL data/DL control/DL data, etc.).

Technical terms used in the present disclosure

- UE: User Equipment
- SSB: Synchronization Signal Block
- MIB: Master Information Block
- RMSI: Remaining Minimum System Information
- FR1: Frequency domain with frequency range of 1.6 GHz or less (e.g., 450 MHz to 6,000 MHz)
- FR2: Millimeter wave (mmWave) domain with frequency range of 2.24 GHz or higher (e.g., 24,250 MHz to 52,600 MHz)
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc.

necessary for cell access of an NR UE.

- CORESET (COntrol REsource SET): Time/frequency resource in which an NR UE tries candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated with a separate TB from SIB1 and is transmitted on a separate PDSCH.
- CORESET#0-R: CORESET#0 for reduced capability NR devices
- Type0-PDCCH-R CSS set: a search space set in which a redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): SSB that has been deployed on NR sync raster, but does not include RMSI scheduling information of a corresponding cell for measurement. But, the SSB may include information informing a location of cell defining SSB.
- SCS: Subcarrier Spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Cell supporting only redcap device or service
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If separate RO is configured for normal UE 2-step RACH, it is divided into RO-N1 (4-step) and RO-N2 (2-step).
- RO-R: RACH Occasion (RO) separately configured from RO-N for redcap UE 4-step RACH and 2-step RACH (if configured)
- RO-R1, RO-R2: If separate RO is configured for redcap UE 2-step RACH, it is divided into RO-R1 (4-step) and RO-R2 (2-step).
- PG-R: MsgA-Preambles Group for redcap UEs
- RAR: Random Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication
- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception
- RRC: Radio Resource Control
- RRM: Radio Resource Management

- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing
- DMRS: DeModulation Reference Signal
- TDD: Time Division Duplex
- PCI: Physical layer Cell ID

## Composition and Method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases. Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

1) Railway mobile communication
2) Utility/infrastructure network
3) Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for NB service/use case support (TS38.101-1)]

NB services/use cases can be supported, for example, in the following NR operating frequency band defined in NR standard 3GPP TS (technical standard) 38.101-1. Table 5 shows "Table 5.2-1: NR operating bands in FR1" of 3GPP TS 38.101-1.

[Table 5]

| NR operating ban d | Uplink (UL) *operating band* BS receive/UE transmit $F_{UL\_low}$ - $F_{UL\_high}$ | Downlink (DL) *operating band* BS transmit/UE receive $F_{DL\_low}$ - $F_{DL\_high}$ | Duplex M ode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |

(continued)

| NR operating ban d | Uplink (UL) *operating band* BS receive/UE transmit $F_{UL\_low}$ - $F_{UL\_high}$ | Downlink (DL) *operating band* BS transmit/UE receive $F_{DL\_low}$ - $F_{DL\_high}$ | Duplex M ode |
|---|---|---|---|
| n100 | 874.4 MHz - 880 MHz | 919.4 MHz - 925 MHz | FDD |

[Example of definition of channel BW of less than 5 MHz for NB service/use case support]

Table 6 shows an example of the maximum number of configurable RBs ($N_{RB}$) for each channel BW. Specifically, Table 6 shows an example of defining 3 MHz channel BW and the maximum number of configurable RBs ($N_{RB}$) 15 for the 3 MHz channel BW in order to support the NB services/use cases based on 5G NR, and representing a resource utilization ratio (or RU). The RU can be defined as in Equation 1 below.

$$【Equation\ 1】$$

$$RU = (N_{RB}\ in\ MHz)\ /\ (channel\ BW\ in\ MHz)$$

Table 6 below shows a support example 1 for channel BW of less than 5 MHz.

[Table 6]

| Channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| $N_{RB}$ | 15 | 25 | 52 | 79 | 106 | 133 | 160 | 216 | 270 |
| RU | 0.9 | 0.9 | 0.936 | 0.948 | 0.954 | 0.958 | 0.96 | 0.972 | 0.972 |

Alternatively, for newly defined 3 MHz channel BW, considering interference between contiguous channels and the resource utilization ratio, one of $N_{RB}$ values shown in Table 7 below may be defined and used. Alternatively, multiple values of $N_{RB}$ values shown in Table 7 below are supported in the NR standard and may be supported by BS configuration.
Table 7 below shows a support example 2 for channel BW of less than 5 MHz.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU(%) | 0.72 | 0.78 | 0.84 | 0.9 | 0.96 |

In this instance, the channel BW/$N_{RB}$ may apply the same value for both DL and UL, or channel BW/$N_{RB}$ may be configured/supported separately/independently for DL and UL. The latter case may be a method of selecting when intending to apply conditions where additional DFT precoding is applicable only to the UL when determining the $N_{RB}$ values, while supporting maximum channel BW/$N_{RB}$ values in both DL and UL, for example, considering interference between contiguous channels and the resource utilization ratio.

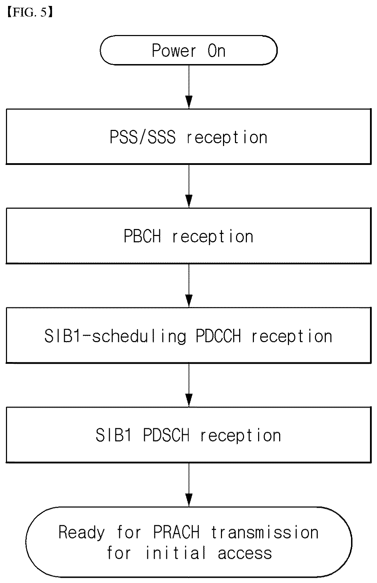

FIG. 5 illustrates an example of a process for a UE to receive DL signals/channels in an initial access procedure in a system applicable to the present disclosure.
Referring to FIG. 5, in an initial access procedure, a UE may receive DL signals/channels in order of (1) power-On, (2) PSS/SSS reception, (3) PBCH reception, (4) SIB1-scheduling PDCCH reception, (5) SIB1 PDSCH reception, and (6) ready for PRACH transmission for initial access.
The initial access procedure was described above in detail. The existing NR UE may receive CORESET#0 information through an MIB transmitted on a PBCH and receive initial DL signals/channels through CORESET#0 frequency band in an initial access procedure. However, when the NR UE operates in a narrowband, the existing method may be inefficient considering the channel BWs shown in Tables 6 and 7 and supportable CORESET#0 bandwidth in the NR standard.
The present disclosure proposes the following methods for supporting transmission/reception of DL signal/-channel in a narrowband.
In the present disclosure, narrowband and NB can be interpreted/applied interchangeably. Further, channel BW,

$N_{RB}$, allowed/supported transmission BW, (punctured/non-punctured) PBCH BW, and maximum transmission BW can be interpreted/applied interchangeably.

In the present disclosure, CORESET#0 BW includes the meaning after applying the puncturing if CORESET#0 is punctured, i.e., the meaning of punctured CORESET#0 BW. In the same manner, PBCH BW includes the meaning after applying the puncturing if PBCH is punctured, i.e., the meaning of punctured PBCH BW.

In the present disclosure, broadcast signaling includes system information including SIB1, MIB, PBCH payload generated in PHY layer in addition to the MIB, and a signaling method using PBCH scrambling sequence and PBCH DMRS sequence initialization information.

In the present disclosure, the broadcast signaling may include differently defining or interpreting the existing bit/field. For example, conventionally, if some of MIB, PBCH payload generated in PHY layer in addition to the MIB, and a signaling method using PBCH scrambling sequence and PBCH DMRS sequence initialization information, that have been used for the broadcast signaling, no longer need to be signaled, the broadcast signaling may include newly defining a corresponding bit/field and signaling it. For example, in a narrowband frequency band supporting only 15 kHz SCS, the broadcast signaling may include using subCarrierSpacingCommon in MIB (1 bit, {15 kHz, 30 kHz}) as other 1-bit broadcast signaling purposes. Further, if PBCH/SIB1/SIB1-scheduling DCI transmission for a new UE is possible using a frequency band, a dedicated spectrum, a dedicated sync raster, etc. without an influence on a legacy UE, the broadcast signaling may include a method of performing signaling by newly defining or differently interpreting bit/field that has been used for broadcast signaling purpose for the existing legacy UE.

## PDCCH Reception Method

In order to receive SIB1-PDCCH in a narrowband, a UE may receive CORESET#0 and Type0-PDCCH CSS set information through MIB transmitted on PBCH. Since CORESET#0 bandwidth supported in the current NR standard is 24 PRBs (4.32 MHz) based on 15 kHz SCS, it may exceed narrowband channel BWs shown in Tables 6 and 7. In this instance, a base station (BS) may RE-map PDCCH transmission REs to CORESET #0 and then transmit only the REs falling within the channel BW. That is, the base station may puncture the PDCCH transmission REs exceeding the channel BW and transmit the remaining REs.

The UE may assume the above BS operation (i.e., puncturing operation) and receive the PDCCH transmission REs within the channel BW. That is, according to NR standard, the UE may assume that not all the PDCCH transmission REs RE-mapped to CORESET#0 bandwidth but only some PDCCH transmission REs falling within the channel BW are transmitted, and may receive them. Hence, there may occur a loss of PDCCH reception coverage.

In order to recover the loss of the PDCCH reception coverage or expand the PDCCH reception coverage, the BS may apply power boosting to PDCCH transmitted to CORESET#0. Whether to apply the power boosting to the PDCCH transmitted to CORESET#0 may be determined or value(s) of the power boosting may be differently set based on CORESET#0 BW, or channel BW, or a relationship between the two. The value(s) of the power boosting may be pre-defined in the standard (per CORESET#0 BW) or may be broadcast signaled.

According to the existing NR standard 3GPP TS 38.213, as shown in the following Table 8, when the UE monitors PDCCH transmitting DCI format 1_0 with CRC scrambled by SI-RNTI, P-RNTI, RA-RNTI, etc. through CORESET#0, a ratio of DMRS EPRE of the PDCCH to SSS EPRE has a value between -8 dB and 8 dB. If the PDCCH is power boosted and transmitted, the value of the power boosting may be limited so that the PDCCH DMRS EPRE satisfies the above condition when the power boosting has been performed. Alternatively, if the power boosting is applied/configured, the ratio of DMRS EPRE of the PDCCH to SSS EPRE may be stipulated to have a value between (-8 + power boosting value) dB and (8 + power boosting value) dB.

[Table 8]

| |
|---|
| ...<br>If the UE has not been provided dedicated higher layer parameters, the UE may assume that the ratio of PDCCH DMRS EPRE to SSS EPRE is within -8 dB and 8 dB when the UE monitors PDCCHs for a DCI format 1_0 with CRC scrambled by SI-RNTI, P-RNTI, or RA-RNTI, or for a DCI format 2_7.<br>... |

Alternatively, new CORESET#0 configuration may be added for narrowband transmission. For example, a bandwidth of CORESET#0 added/introduced for narrowband transmission may be less than or equal to the channel BW, or may be less than the conventional CORESET#0 bandwidth even if the bandwidth of CORESET#0 is greater than the channel BW. For example, the following CORESET#0 configurations may be added.

(1) CORESET#0 size = 12 PRBs

(1-1) In this case, 12 REGs per OFDM symbols * 2 OFDM symbols = 24 REGs = 4 CCE AL can be supported using 2 OFDM symbols.

(1-2) Alternatively, 12 REGs per OFDM symbols * 3 OFDM symbols = 36 REGs = 6 CCE AL can be supported using 3 OFDM symbols.

(2) CORESET#0 size = 14 PRBs

(2-1) In this case, 14 REGs per OFDM symbols * 3 OFDM symbols = 42 REGs = 7 CCE AL can be supported using 3 OFDM symbols.

(3) CORESET#0 size = 15 PRBs

(3-1) In this case, 15 REGs per OFDM symbols * 3 OFDM symbols = 45 REGs = 7.5 CCE AL can be supported using 3 OFDM symbols.

(4) CORESET#0 size = 16 PRBs

(4-1) In this case, 16 REGs per OFDM symbols * 3 OFDM symbols = 48 REGs = 8 CCE AL can be supported using 3 OFDM symbols.

If CORESET#0 size = 16 PRBs as above, when the channel BW is less than 16, the BS may perform PDCCH RE mapping based on CORESET#0 size = 16 PRBs and then puncture a portion exceeding part or all of the channel BW to transmit the portion. The puncturing may be performed on highest PRB index(es) or lowest PRB index(es) of CORESET#0 band. The above puncturing method may be predefined in standard or broadcast signalled.

For example, if CORESET#0 size = 16 PRBs and the channel BW is 15 PRBs, the BS may perform PDCCH RE mapping based on CORESET#0 size = 16 PRBs and then puncture 1 RB exceeding the channel BW (or if RB grid is not aligned and so two or more RBs is not included in the channel BW, all the RBs exceeding part or all of the channel BW) to transmit it.

Considering PDCCH performance, CORESET#0 may be aligned to the channel BW as much as possible in units of RB, REG bundle, or the number of RBs spanned by one CCE. In this instance, it is possible to align the smallest/lowest RB index of CORESET#0 and the smallest/lowest RB index within the channel BW as much as possible, or conversely, align the largest/highest RB index of CORESET#0 and the largest/highest RB index within the channel BW as much as possible. The method applied in this case may be predefined in standard or broadcast signalled.

The CORESET#0 configuration including the CORESET#0 size (which can include the number of CORESET#0 OFDM symbols, interleave on/off, whether power boosting is performed, (maximum) CCE AL support related information, offset, etc.) may apply a fixed value considering a carrier BW, etc., or support multiple setting values and perform the broadcast signaling. In the former case, there may be an advantage in terms of signaling overhead. In the latter case, there may be an advantage in terms of flexibility to select the optimal CORESET#0 configuration in terms of performance, etc. depending on the carrier BW, etc.

The CORESET#0 configuration including the CORESET#0 size (which can include the number of CORESET#0 OFDM symbols, interleave on/off, whether power boosting is performed, (maximum) CCE AL support related information, offset, etc.) may configure all or some parameters using a reserved entry of CORESET#0 configuration (3GPP TS 38.213 Table 13-1) in the existing 3GPP TS 38.213 spec (method A), or add a new Table 13-1x in form of 3GPP TS 38.213 Table 13-1 to select among new multiple entries (method B).

In the method A, a method of configuring some parameters may perform indicating/displaying Offset1 and Offset2 via broadcast signaling among, for example, two offset values Offset1 and Offset2 predefined in standard. In this instance, other parameters may follow CORESET#0 configuration defined in a reserved entry of 3GPP TS 38.213 Table 13-1. As a specific example of the broadcast signaling, if there is no need to consider legacy impacts, such as by acquiring SSB through a dedicated sync raster (see related contents below), a displaying/indicating method of using subCarrier-SpacingCommon in MIB (1 bit) mentioned in the above broadcast signaling may be possible.

If the existing table is used, i.e., in the method A, a newly added entry may be indicated through a conventional signaling method (controlResourceSetZero in MIB) or a combination of the conventional signaling method and separate broadcast signaling. If a new table is used, i.e., the method B may i) predefine it in the spec per frequency band, ii) distinguish it through a dedicated spectrum or a dedicated sync raster distinguished from a legacy UE, or iii) designate a table to refer to via separate broadcast signaling, and an entry in the table may indicate the existing signaling method (controlResourceSetZero in MIB). Alternatively, it may be indicated through combinations of the methods. The i) and ii) methods may be aimed to distinguish whether or not legacy UE access is allowed, and may be to perform separate broadcast signaling only for new UEs if the legacy UE access is not allowed.

Alternatively, the method A and the method B may be determined by the carrier BW. That is, if a size of the carrier BW is greater than or equal to (exceeds) a specific value, the method A may be applied, and if the size of the carrier BW is less than (less than or equal to) the specific value, the method B may be applied. This may be aimed to apply a new table only when the carrier BW is less than the specific value.

Alternatively, the method A and the method B may be determined by the i), ii), ii) or combinations thereof. For example, the method B may be applied only for a UE receiving PBCH through the dedicated spectrum or the dedicated sync raster.

Alternatively, either the method A or the method B may be designed and then applied to all the carrier BWs. In this case, if the indicated CORESET#0 BW is greater than the carrier BW, CORESET#0 may be punctured within the carrier BW and transmitted. That is, when PDCCH is received through the corresponding CORESET#0, the UE may assume and receive only PDCCH transmission RE/RB/REG/REG bundle/CCE transmission falling within the carrier BW.

Initial DL BWP

As illustrated in FIG. 5, the UE receives the PBCH and then receives DL channel/signal through an initial DL BWP. In a narrowband wireless communication system, the initial DL BWP may be determined based on the following methods.

## Determining/Using CORESET#0 BW as Initial DL BWP

According to the existing NR standard, even in a narrowband wireless communication system, a UE may receive DL channel/signal through CORESET#0 BW until before a separate initial DL BWP is configured via SIB1 or during an initial access procedure. Alternatively, the UE may assume the CORESET#0 BW as an initial DL BWP and perform an operation in the initial DL BWP, until before a separate initial DL BWP is configured via SIB1 or during an initial access procedure.

[Example]

(1) To support a method of determining/using CORESET#0 BW as an initial DL BWP in a narrowband wireless communication system, for example, CORESET#0 with 12-PRB bandwidth may be supported. In this case, both the CORESET#0 BW and a BW of the initial DL BWP become 12 PRBs, and 2 OFDM symbols may configure CORESET#0 to support up to 4 CCEs, or 3 OFDM symbols may configure CORESET#0 to support up to 6 CCEs. In the later case, CCE AL = 6 may be newly supported/introduced.

(2) For another example, CORESET#0 with 18-PRB bandwidth in 5 MHz channel BW may be supported. In this case, both the CORESET#0 BW and a BW of the initial DL BWP become 18 PRBs, and 2 OFDM symbols may configure CORESET#0 to support up to 6 CCEs, or 3 OFDM symbols may configure CORESET#0 to support up to 9 CCEs. In the former case, CCE AL = 6 may be newly supported/introduced.

(3) Alternatively, the COREST#0 BW may be set to have the following relationship.

$$\text{CORESET\#0 BW} = \text{BW of initial DL BWP} = \text{channel BW}$$

(4) For another example, if a channel BW is 15 PRBs, the CORESET#0 BW may be set to 15 PRBs in the same manner, and 2 OFDM symbols may configure CORESET#0 to support 4 CCE AL, or 3 OFDM symbols may configure CORESET#0 to support 7 CCE AL, or 4 OFDM symbols may configure CORESET#0 to support 10 CCE AL. This method may be aimed to use the CORESET#0 BW as widely as possible considering the initial DL BWP.

## SIB1 Transmission Method

In this instance, SIB1 PDSCH may be scheduled within the initial DL BWP, i.e., CORESET#0 BW.

## Method of configuration Initial DL BWP

The initial DL BWP is determined by CORESET#0 related configuration. CORESET#0 related configuration parameter(s) may be set through MIB transmitted on PBCH. For example, as specified in NR standard TS38.213, a BW and the number of OFDM symbols of CORESET#0 may be set by controlResourceSetZero in pdcch-ConfigSIB 1 included in the MIB.

If the CORESET#0 is punctured and transmitted, a BS/UE may assume the punctured (or actual PDCCH transmitted after puncturing) CORESET#0 BW as the initial DL BWP and perform an operation in the initial DL BWP. That is, the BS/UE may assume the punctured (or actual PDCCH transmitted after puncturing) CORESET#0 BW as CORESET#0 BW and may receive DL channel/signal, until before a separate initial DL BWP is configured from SIB1 or during an initial access procedure.

The BS may configure parameters related to the initial DL BWP via SIB1. In this instance, the BS may configure so that the initial DL BWP includes punctured/truncated (or actual PDCCH transmitted after puncturing/truncation) CORESET#0 bandwidth or "PDCCH transmission/reception bandwidth" in the same sense through locationAndBandwidth parameter of the initial DL BWP configured in SIB1. In this case, the UE may reflect locationAndBandwidth information immediately upon receiving the locationAndBandwidth information to determine a location on a frequency of the initial DL BWP and may receive the DL channel/signal within the initial DL BWP based on this. In this instance, the UE may maintain the CORESET#0 until after receiving RRCSetup/RRCResume/RRCReestablishment message, or if CORESET information exists in the initial DL BWP, the UE may receive PDCCH using the CORESET instead of the CORESET#0.

Alternatively, if the initial DL BWP configured by the BS via SIB1 does not include the PDCCH transmission/reception bandwidth, the UE may receive the DL channel/signal during the initial access procedure and the post-initial access procedure using the initial DL BWP configured in SIB1. In this instance, if the CORESET information exists in the initial DL BWP, the UE may receive the PDCCH using the CORESET instead of the CORESET#0.

Method of determining/configuring initial DL BWP separately/independently from CORESET#0 BW

Alternatively, for a narrowband wireless communication system, a separate initial DL BWP may be determined/configured separately/independently from CORESET#0. A BW of an initial DL BWP configured separately/independently from CORESET#0 BW may be determined/configured to have the following relationship with the CORESET#0 BW.

## [Method #1] Method of configuring BW of initial DL BWP to be greater than CORESET#0 BW

A BW of an initial DL BWP may be configured to be greater than CORESET#0 BW. In this instance, the initial DL BWP may be configured to include CORESET#0 band. For example, in a narrowband, if a channel BW is 14 PRBs (or 15 PRBs), or is set like this, the CORESET#0 BW may be set to 12 PRBs so that the CORESET#0 BW falls within the channel BW, and the initial DL BWP may be set to 14 PRBs (or 15 PRBs) in the same manner as the channel BW.

In the Method #1, the case of configuring the CORESET#0 BW to be less than the channel BW may be an example where a punctured PBCH BW is 12 PRBs. That is, in this case, (punctured) CORESET#0 BW (12 PRBs) may be configured at the same BW as the punctured PBCH BW (12 PRBs) and a location on a frequency without signaling in a method of predefining in spec or by broadcast signaling, and a BS may transmit SIB1-scheduling PDCCH through the corresponding (punctured) CORESET#0 BW (12 PRBs). In this instance, a UE may receive SIB1 PDSCH within the channel BW (14 or 15 PRBs) using SIB1-scheduling information received within the (punctured) CORESET#0 BW (12 PRBs).

In the Method #1, DL channels/signals transmitted through the initial DL BWP including the SIB1 PDSCH may be scheduled within the initial DL BWP, and thus a FDRA field of DCI scheduling PDSCHs transmitted on the initial DL BWP may be determined based on the BW of the initial DL BWP (in the above example, 14 PRBs or 15 PRBs). That is, $N_{\text{RB}}^{\text{DL,BWP}}$ defined in NR standard TS38.212 may be the BW of the initial DL BWP not CORESET#0 size. Alternatively, if the entire channel BW is used as the initial DL BWP, $N_{\text{RB}}^{\text{DL,BWP}}$ may be the channel BW.

## [Method #2] Method of configuring BW of initial DL BWP to be less than CORESET#0 BW

A BW of an initial DL BWP may be configured to be less than CORESET#0 BW. In this instance, the initial DL BWP may be configured to include a part of CORESET#0 band. For example, in a narrowband, if a channel BW is 12 PRBs, or is set like this, the CORESET#0 BW may be set to 24 PRBs, and the initial DL BWP may be determined/configured as lowest or highest 12 PRBs of CORESET#0.

The Method #2 may include a case where the initial DL BWP is configured to be the same as a (puncture) PBCH BW or is configured to include the (puncture) PBCH BW but to be less than the CORESET#0.

This method may be used to support the case of reusing CORESET#0 supported in the conventional NR standard in a narrowband wireless communication system.

In the Method #2, DL channels/signals transmitted through the initial DL BWP including SIB1 PDSCH may be scheduled within the initial DL BWP, and thus a FDRA field of DCI scheduling PDSCHs transmitted on the initial DL BWP may be determined based on the BW of the initial DL BWP (in the above example, 12 PRBs). That is, $N_{\text{RB}}^{\text{DL,BWP}}$ defined in NR standard TS38.212 may be the BW of the initial DL BWP not CORESET#0 size. Alternatively, if the entire channel BW is used as the initial DL BWP, $N_{\text{RB}}^{\text{DL,BWP}}$ may be the channel BW.

Alternatively, in the Method #2, DL channels/signals transmitted through the initial DL BWP including SIB1 PDSCH may be scheduled within the CORESET#0 BW. In this instance, a FDRA field of DCI scheduling PDSCHs transmitted on the initial DL BWP may be determined based on the CORESET#0 BW (in the above example, 24 PRBs) as prescribed in the existing NR standard. In this case, all or some of the PDSCHs transmitted on the initial DL BWP may be punctured and transmitted in a frequency domain exceeding the initial DL BWP, or may be rate- matched and transmitted within the initial DL BWP. Whether the PDSCHs transmitted on the initial DL BWP is punctured or rate-matched may be indicated based on broadcasting signaling.

## [Method #3] Method of configuring BW of initial DL BWP to be the same as CORESET#0 BW

A BW of an initial DL BWP may be configured to be the same as CORESET#0 BW. This method is the same as the method of determining/using the CORESET#0 BW as the initial DL BWP described above. In the Method #3, separate signaling for the initial DL BWP may not be necessary. Alternatively, if there is no separate signaling, it may be assumed that initial DL BWP = CORESET#0 BW.

In the Method #3, if the CORESET#0 BW is punctured, the CORESET#0 BW may include a concept of CORESET#0 BW (i.e., non-punctured CORESET#0 BW) before the puncturing and a concept of CORESET#0 BW (i.e., punctured CORESET#0 BW) after the puncturing.

## [Method #4] Method of configuring initial DL BWP to include part of CORESET#0

An initial DL BWP may be configured to include a part of CORESET#0 BW. For example, if SSB and CORESET#0 cannot be received both or simultaneously within a channel BW, a base station may configure all SSBs or only PSS/SSS among the SSBs to be included in the channel BW, and only a part of the CORESET#0 to be included in the channel BW regardless of a size of the CORESET#0. In this instance, if the initial DL BWP is configured to be included in the channel BW, configuration described in the Method #4 may be expected. The Method #4 may be used for the purpose of reusing CORESET#0 configuration supported in the existing NR standard. In this instance, because the BS/UE may not be able to transmit/receive all PDCCHs, a loss of PDCCH reception coverage may occur.

The Method #4 may include the initial DL BWP being defined as a maximum transmission BW. In this case, the UE may assume the maximum transmission BW as the initial DL BWP in the initial access procedure. The definition/assumption may be applied only in narrowband or only when the CORESET#0 BW exceeds the channel BW in narrowband.

The Method #4 may also include the initial DL BWP being defined as a PBCH BW. In this case, the UE may assume the PBCH BW as the initial DL BWP in the initial access procedure. The definition/assumption may be applied only in narrowband or only when the CORESET#0 BW exceeds the channel BW in narrowband. If the maximum transmission BW is less than the PBCH BW, the UE may transmit only a subset of PBCH transmission RBs within the maximum transmission BW. In this case, the PBCH BW assumed by the UE as the initial DL BWP may be a PBCH BW "used for actual PBCH transmission." That is, if the subset of PBCH transmission RBs is punctured and transmitted, the UE may assume the PBCH BW "used for actual PBCH transmission after being punctured" or the "punctured" PBCH BW in the same sense as the initial DL BWP. This may be for the purpose of removing a UE complexity problem or an impact on reception coverage that may occur due to puncturing, partial reception, etc. within the initial DL BWP assumed by the UE in this situation.

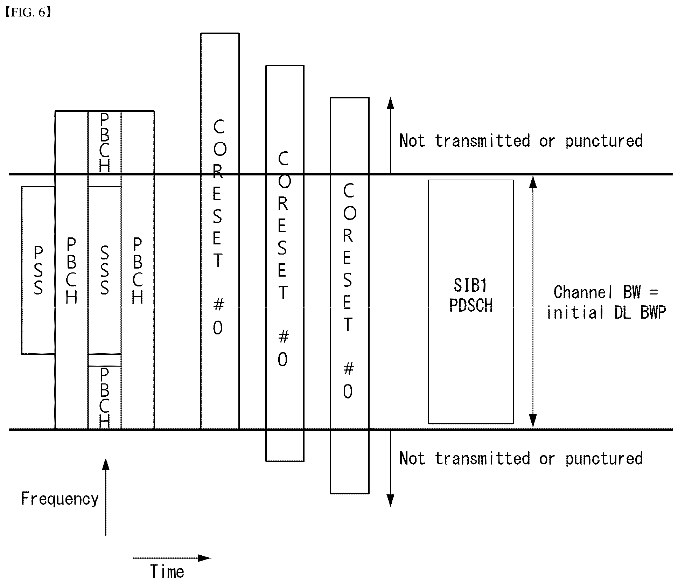

FIG. 6 illustrates an example where a BS or a UE defines or assumes an initial DL BWP as a (punctured) PBCH BW in a system applicable to the present disclosure.

Specifically, FIG. 6 illustrates initial DL BWP example 1 proposed in the Method #4.

FIG. 6 illustrates an example where assuming channel BW = 16 PRB and CORESET#0 BW = 24 PRB, the BS/UE defines/assumes an initial DL BWP as a (punctured) PBCH BW.

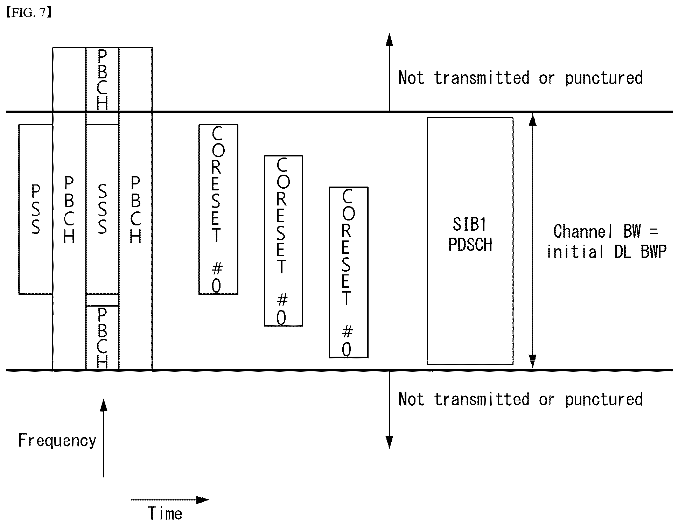

FIG. 7 illustrates an example where a BS or a UE defines or assumes an initial DL BWP as a (punctured) PBCH BW in a system applicable to the present disclosure.

Specifically, FIG. 7 illustrates initial DL BWP example 2 proposed in the Method #4.

The Method #4 can be applied to secure DL transmission resources through the initial DL BWP when CORESET#0 BW is excessively less than the channel BW, for example, when the channel BW has been set to 16 RBs, but the CORESET#0 BW is 12 RBs, or a part of the CORESET#0 BW is included in the channel BW and the CORESET#0 BW included in the channel BW is less than a specific value (e.g., 12 or less RBs ). FIG. 7 illustrates an example where assuming channel BW = 16 PRBs and CORESET#0 BW = 12 PRBs, the BS/UE defines/assumes an initial DL BWP as a (punctured) PBCH BW.

## [Method of configuring separately/independently Initial DL BWP]

If an initial DL BWP is configured separately/independently from CORESET#0 BW, the initial DL BWP may be configured by broadcast signaling.

Alternatively, a frequency location of the initial DL BWP may be determined, based on a frequency location of SSB/PSS/SSS/CORESET#0, as a relative frequency location to this/offset value, and this value may be predefined in NR standard or broadcasted. A bandwidth of the initial DL BWP may be predefined in NR standard or broadcasted. Alternatively, the bandwidth of the initial DL BWP may be predefined in NR standard to have the same value as the channel BW. Alternatively, there is no separate signaling in a broadcast signaling step, the BS/UE may assume that the BW of the initial DL BWP is the same as the channel BW. This determination/configuration method can be expected to have the effect of minimizing signaling overhead when the entire narrowband is used as the initial DL BWP.

Alternatively, the BS may select and apply one of the methods of determining/configuring the initial DL BWP proposed in the present disclosure and display/indicate the applied method to the UE via the broadcast signaling. For example, if 12-PRB CORESET#0 is supported in 15-PRB channel BW, the BS may select one of a method of determining/using the CORESET#0 BW as the initial DL BWP and a method of determining/using the channel BW as the initial DL BWP to apply the selected method and display/indicate the applied method to the UE via the broadcast signaling. The UE may determine the initial DL BWP via broadcasting signaling reception.

## [Description of claims related to UE]

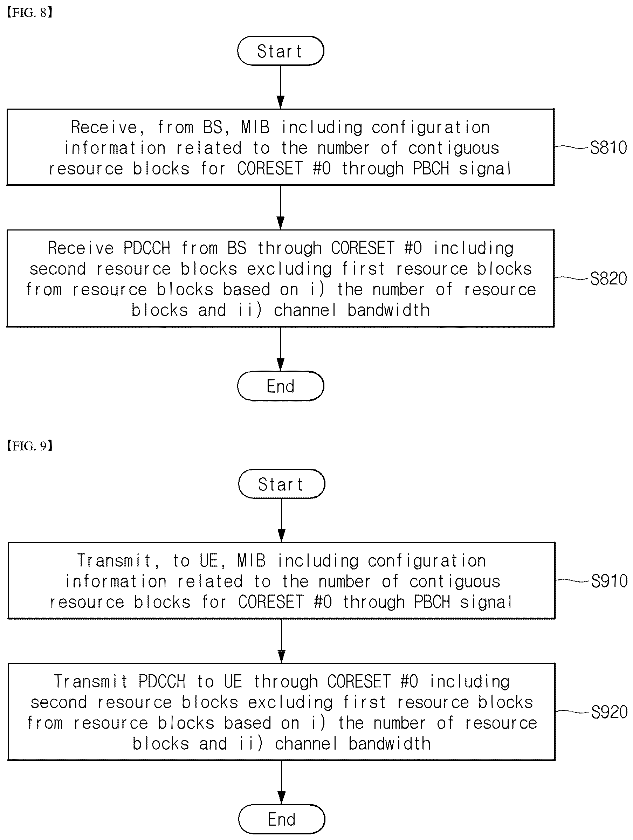

Below, the above-described embodiments are described in detail from a perspective of an operation of a UE with reference to FIG. 8. Methods to be described below are merely distinguished for convenience of explanation. Thus, as long as the methods are not mutually exclusive, it is obvious that partial configuration of any method can be substituted or combined with partial configuration of another method.

FIG. 8 illustrates an example of an operation process of a UE in a system applicable to the present disclosure.

In step S810, a UE receives, from a base station (BS), MIB including configuration information related to a number of contiguous resource blocks for control resource set (CORESET) #0 through a physical broadcast channel (PBCH) signal.

In step S820, the UE receives, from the BS, a physical downlink control channel (PDCCH) through the CORESET #0 including second resource blocks excluding first resource blocks from the resource blocks based on i) the number of the resource blocks and ii) a channel bandwidth.

A puncturing based on a specific number of first resource blocks among the resource blocks is assumed for the CORESET #0. The PBCH signal includes information of a resource offset related to the CORESET #0. The PDCCH is received in a search space related to the CORESET #0 based on the resource offset.

According to various embodiments of the present disclosure, the information of the resource offset may include indication information on one of a first offset and a second offset defined based on the MIB.

According to various embodiments of the present disclosure, the information of the resource offset may be based on subCarrierSpacingCommon information within the MIB.

According to various embodiments of the present disclosure, if a bandwidth based on the number of the resource blocks exceeds the channel bandwidth, the PDCCH may be received through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the channel bandwidth may be less than 5 MHz.

According to various embodiments of the present disclosure, the CORESET #0 may be a CORESET related to a Type0-PDCCH common search space (CSS) set.

According to various embodiments of the present disclosure, there is provided a user equipment (UE) in a wireless communication system. The UE may include a transceiver and at least one processor, and the at least one processor may be configured to perform the operation method of the UE based on FIG. 8.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 8 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the UE based on FIG. 8.

## [Description of claims related to BS]

Below, the above-described embodiments are described in detail from a perspective of an operation of a base station with reference to FIG. 9. Methods to be described below are merely distinguished for convenience of explanation. Thus, as long as the methods are not mutually exclusive, it is obvious that partial configuration of any method can be substituted or combined with partial configuration of another method.

FIG. 9 illustrates an example of an operation process of a base station in a system applicable to the present disclosure.

In step S910, a base station (BS) transmits, to a user equipment (UE), MIB including configuration information related to a number of contiguous resource blocks for control resource set (CORESET) #0 through a physical broadcast channel (PBCH) signal.

In step S820, the BS transmits, to the UE, a physical downlink control channel (PDCCH) through the CORESET #0 including second resource blocks excluding first resource blocks from the resource blocks based on i) the number of the resource blocks and ii) a channel bandwidth.

A puncturing based on a specific number of first resource blocks among the resource blocks is assumed for the CORESET #0. The PBCH signal includes information of a resource offset related to the CORESET #0. The PDCCH is transmitted in a search space related to the CORESET #0 based on the resource offset.

According to various embodiments of the present disclosure, the information of the resource offset may include indication information on one of a first offset and a second offset defined based on the MIB.

According to various embodiments of the present disclosure, the information of the resource offset may be based on subCarrierSpacingCommon information within the MIB.

According to various embodiments of the present disclosure, if a bandwidth based on the number of the resource blocks exceeds the channel bandwidth, the PDCCH may be received through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the channel bandwidth may be less than 5 MHz.

According to various embodiments of the present disclosure, the CORESET #0 may be a CORESET related to a Type0-PDCCH common search space (CSS) set.

According to various embodiments of the present disclosure, there is provided a base station in a wireless communication system. The base station may include a transceiver and at least one processor, and the at least one processor may be configured to perform the operation method of the BS based on FIG. 9.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 9 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the BS based on FIG. 9.

## Wireless device applicable to the present disclosure

Examples of wireless devices to which various embodiments of the present disclosure are applied are described below.

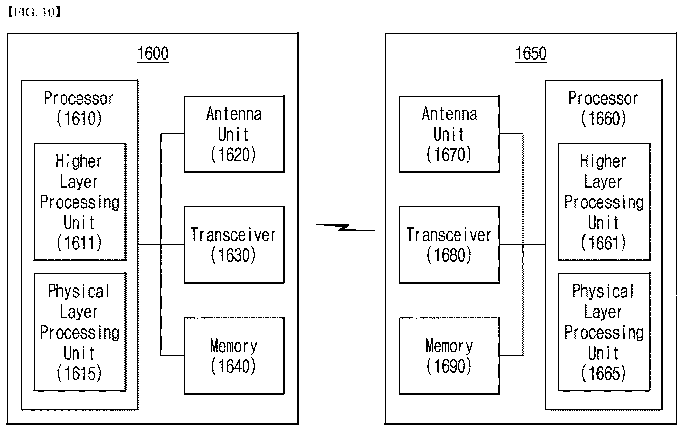

FIG. 10 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure can include various wireless communication technologies in addition to LTE, NR, and 6G.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method performed by a user equipment (UE) in a wireless communication system, the method comprising:

   receiving, from a base station (BS), a master information block (MIB) including configuration information related to a number of contiguous resource blocks for control resource set (CORESET) #0 through a physical broadcast channel (PBCH) signal; and
   receiving, from the BS, a physical downlink control channel (PDCCH) through the CORESET #0 including second resource blocks excluding first resource blocks from the resource blocks based on i) the number of the resource blocks and ii) a channel bandwidth,
   wherein a puncturing based on a specific number of first resource blocks among the resource blocks is assumed for the CORESET #0,
   wherein the PBCH signal includes information of a resource offset related to the CORESET #0, and
   wherein the PDCCH is received in a search space related to the CORESET #0 based on the resource offset.

2. The method of claim 1, wherein the information of the resource offset includes indication information on one of a first offset and a second offset defined based on the MIB.

3. The method of claim 1, wherein the information of the resource offset is based on subCarrierSpacingCommon information within the MIB.

4. The method of claim 1, wherein, based on a bandwidth based on the number of the resource blocks exceeding the channel bandwidth, the PDCCH is received through the second resource blocks related to a bandwidth less than the channel bandwidth.

5. The method of claim 1, wherein the first resource blocks are the specific number of resource blocks with a highest resource block index among the resource blocks.

6. The method of claim 1, wherein the channel bandwidth is less than 5 MHz.

7. The method of claim 1, wherein the CORESET #0 is a CORESET related to a Type0-PDCCH common search space (CSS) set.

8. A method performed by a base station (BS) in a wireless communication system, the method comprising:

transmitting, to a user equipment (UE), a master information block (MIB) including configuration information related to a number of contiguous resource blocks for control resource set (CORESET) #0 through a physical broadcast channel (PBCH) signal; and
transmitting, to the UE, a physical downlink control channel (PDCCH) through the CORESET #0 including second resource blocks excluding first resource blocks from the resource blocks based on i) the number of the resource blocks and ii) a channel bandwidth,
wherein a puncturing based on a specific number of first resource blocks among the resource blocks is assumed for the CORESET #0,
wherein the PBCH signal includes information of a resource offset related to the CORESET #0, and
wherein the PDCCH is transmitted in a search space related to the CORESET #0 based on the resource offset.

9. The method of claim 8, wherein the information of the resource offset includes indication information on one of a first offset and a second offset defined based on the MIB.

10. The method of claim 8, wherein the information of the resource offset is based on subCarrierSpacingCommon information within the MIB.

11. The method of claim 8, wherein, based on a bandwidth based on the number of the resource blocks exceeding the channel bandwidth, the PDCCH is received through the second resource blocks related to a bandwidth less than the channel bandwidth.

12. The method of claim 8, wherein the first resource blocks are the specific number of resource blocks with a highest resource block index among the resource blocks.

13. The method of claim 8, wherein the channel bandwidth is less than 5 MHz.

14. The method of claim 8, wherein the CORESET #0 is a CORESET related to a Type0-PDCCH common search space (CSS) set.

15. A user equipment (UE) in a wireless communication system, the UE comprising:

a transceiver;
at least one processor; and
at least one memory operably connectable to the at least one processor,
wherein the at least one memory is configured to store instructions performing operations based on being executed by the at least one processor, and
wherein the operations comprise all steps of a method according to any one of claims 1 to 7.

16. A base station (BS) in a wireless communication system, the BS comprising:

a transceiver;
at least one processor; and
at least one memory operably connectable to the at least one processor,
wherein the at least one memory is configured to store instructions performing operations based on being executed by the at least one processor, and
wherein the operations comprise all steps of a method according to any one of claims 8 to 14.

17. A control device controlling a user equipment (UE) in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

[FIG. 1]

INITIAL CELL SEARCH — SYSTEM INFORMATION RECEPTION — RANDOM ACCESS PROCEDURE — GENERAL DL/UL Tx/Rx

PSS-SSS& [DLRS]& PBCH — S11

PDCCH/ PDSCH (BCCH) — S12

PRACH — S13 · PDCCH/ PDSCH — S14 · PUSCH — S15 · PDCCH/ PDSCH — S16

PDCCH/ PDSCH — S17 · PUSCH/ PUCCH — S18

· DL/UL ACK/NACK
· UE CQI/PMI RI REPORT USING PUSCH AND PUCCH

【FIG. 2】

【FIG. 3】

【FIG. 4】

1 slot

DL control region

DL data or UL data region

UL control region

【FIG. 5】

```
              ╭─────────────────────╮
              │      Power  On       │
              ╰──────────┬──────────╯
                         │
                         ▼
  ┌────────────────────────────────────────┐
  │           PSS/SSS reception             │
  └────────────────────┬───────────────────┘
                       │
                       ▼
  ┌────────────────────────────────────────┐
  │             PBCH reception              │
  └────────────────────┬───────────────────┘
                       │
                       ▼
  ┌────────────────────────────────────────┐
  │    SIB1-scheduling PDCCH reception      │
  └────────────────────┬───────────────────┘
                       │
                       ▼
  ┌────────────────────────────────────────┐
  │           SIB1 PDSCH reception          │
  └────────────────────┬───────────────────┘
                       │
                       ▼
        ╭──────────────────────────────────╮
        │   Ready for PRACH transmission    │
        │        for initial access         │
        ╰──────────────────────────────────╯
```

【FIG. 6】

Not transmitted or punctured

Channel BW =
initial DL BWP

Not transmitted or punctured

Frequency

Time

EP 4 712 648 A1

【FIG. 7】

26

[FIG. 8]

Start

Receive, from BS, MIB including configuration information related to the number of contiguous resource blocks for CORESET #0 through PBCH signal — S810

Receive PDCCH from BS through CORESET #0 including second resource blocks excluding first resource blocks from resource blocks based on i) the number of resource blocks and ii) channel bandwidth — S820

End

[FIG. 9]

Start

Transmit, to UE, MIB including configuration information related to the number of contiguous resource blocks for CORESET #0 through PBCH signal — S910

Transmit PDCCH to UE through CORESET #0 including second resource blocks excluding first resource blocks from resource blocks based on i) the number of resource blocks and ii) channel bandwidth — S920

End

[FIG. 10]

## INTERNATIONAL SEARCH REPORT

| International application No. |
| --- |
| **PCT/KR2024/006404** |

**A. CLASSIFICATION OF SUBJECT MATTER**

**H04W 72/23**(2023.01)i; **H04W 72/0453**(2023.01)i; **H04W 72/0457**(2023.01)i; **H04W 48/10**(2009.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 72/23(2023.01); H04J 11/00(2006.01); H04L 27/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: narrowband, 5MHz, PDCCH, CORESET #0, Type0-PDCCH CSS set, MIB, PBCH, block index, offset, puncturing

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | NOKIA et al. NR support for below 5 MHz BW. R1-2301096, 3GPP TSG RAN WG1 #112. Athens (Greece). 17 February 2023.<br>See sections 4.1-4.2; and figures 8-9. | 1,4-6,8,11-13,15-20<br>2-3,7,9-10,14 |
| Y | QUALCOMM INCORPORATED. NR support for dedicated spectrum less than 5MHz for FR1. R1-2301445, 3GPP TSG RAN WG1 #112. Athens, Greece. 17 February 2023.<br>See section 2.2.2. | 2-3,7,9-10,14 |
| A | LG ELECTRONICS. Discussion on enhancements for dedicated spectrum less than 5 MHz. R1-2301114, 3GPP TSG RAN WG1 Meeting #112. Athens, Greece. 17 February 2023.<br>See section 2. | 1-20 |
| A | SAMSUNG. Enhancements to operate NR on dedicated spectrum less than 5 MHz. R1-2301296, 3GPP TSG RAN WG1 #112. Athens, Greece. 17 February 2023.<br>See sections 2-4. | 1-20 |
| A | KR 10-2018-0080700 A (SAMSUNG ELECTRONICS CO., LTD.) 12 July 2018 (2018-07-12)<br>See paragraphs [0172]-[0175]; and figure 12. | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 August 2024** | **27 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006404**

| Patent document cited in search report | | | Publication date (day/month/year) | Patent family member(s) | | | Publication date (day/month/year) |
|---|---|---|---|---|---|---|---|
| KR | 10-2018-0080700 | A | 12 July 2018 | CN | 110168972 | A | 23 August 2019 |
| | | | | CN | 110168972 | B | 20 April 2021 |
| | | | | CN | 113206728 | A | 03 August 2021 |
| | | | | CN | 113206728 | B | 22 December 2023 |
| | | | | EP | 3539232 | A1 | 18 September 2019 |
| | | | | EP | 3539232 | A4 | 11 December 2019 |
| | | | | EP | 3539232 | B1 | 18 November 2020 |
| | | | | EP | 3790218 | A1 | 10 March 2021 |
| | | | | EP | 3790218 | B1 | 16 November 2022 |
| | | | | JP | 2020-504971 | A | 13 February 2020 |
| | | | | JP | 2022-084828 | A | 07 June 2022 |
| | | | | JP | 7046955 | B2 | 04 April 2022 |
| | | | | JP | 7374247 | B2 | 06 November 2023 |
| | | | | KR | 10-2560590 | B1 | 27 July 2023 |
| | | | | US | 10492157 | B2 | 26 November 2019 |
| | | | | US | 11026199 | B2 | 01 June 2021 |
| | | | | US | 2018-0192383 | A1 | 05 July 2018 |
| | | | | US | 2020-0045658 | A1 | 06 February 2020 |

Form PCT/ISA/210 (patent family annex) (July 2022)